# EUROPEAN PATENT APPLICATION

(11) **EP 4 292 951 A1**
(43) Date of publication of application: **20.12.2023**
(21) Application number: 22869617.5
(22) Date of filing: 29.03.2022
(51) Int. Cl.: B65D 43/16

(54) **CONTAINER**

(30) Priority: 15.09.2021 JP 2021150609
(71) Applicant: Pacific Industrial Co., Ltd., Ogaki-shi, Gifu 503-8603 (JP)
(72) Inventor: NOSE, Kota, Ogaki-shi, Gifu 503-8603 (JP); SUGIMOTO, Seiji, Ogaki-shi, Gifu 503-8603 (JP); OGI, Ryusei, Ogaki-shi, Gifu 503-8603 (JP)
(74) Representative: Kramer Barske Schmidtchen Patentanwälte PartG mbB
(86) International application number: PCT/JP2022/015592
(87) International publication number: WO 2023/042465

(57) **Abstract**

[Problem] There is a demand for the development of a technique for easily mating container elements that constitute a container.

[Solution] A container 10 includes: a pair of container elements 20 to be mated to constitute the container; and a hinge 30 connecting the container elements 20, the container elements 20 and the hinge 30 being integrally formed from a resin by foam molding with mating surfaces 21M of the container elements 20 pointing unidirectionally. In the container 10, at least a part of the hinge 30 is pulled when the pair of container elements 20 are mated.

## Description

### TECHNICAL FIELD

The present disclosure relates to a container.

### BACKGROUND ART

A container including a plurality of container elements that are mated has conventionally been known (see, for example, Patent Document 1).

### RELATED ART DOCUMENTS

### PATENT DOCUMENTS

Patent Document 1: JP 2005-076848 A (FIG. 1, paragraph [0014], etc.)

### SUMMARY OF THE INVENTION

### PROBLEMS TO BE SOLVED BY THE INVENTION

There is a demand for the development of a technique for easily mating container elements.

### MEANS OF SOLVING THE PROBLEMS

In order to solve the foregoing problem, a container according to one aspect includes: a pair of container elements to be mated to constitute the container; and a hinge connecting the pair of container elements, the pair of container elements and the hinge being integrally formed from a resin by foam molding with mating surfaces of the pair of container elements pointing unidirectionally. In the container, at least a part of the hinge is pulled when the pair of container elements are mated, the hinge has a V-shaped groove located lower than the mating surfaces and including a pair of inner surfaces arranged in a V shape and brought into surface contact with each other when the pair of container elements are mated, and has a thickness that gradually decreases toward a bottom of the V-shaped groove, the bottom of the V-shaped groove is pulled when the pair of container elements are mated, the hinge has two of the V-shaped grooves, the hinge includes a protrusion located between the two V-shaped grooves, the protrusion having a vertex located lower than the mating surfaces, and of the four inner surfaces of the two V-shaped grooves, two inner surfaces which are farthest from each other are partially brought into contact with each other.

A container according to another aspect includes: a pair of container elements to be mated to constitute the container; and a hinge connecting the pair of container elements, the pair of container elements and the hinge being integrally formed from a resin by foam molding with mating surfaces of the pair of container elements pointing unidirectionally. In the container, at least a part of the hinge is pulled when the pair of container elements are mated, the hinge has a V-shaped groove located lower than the mating surfaces and including a pair of inner surfaces arranged in a V shape and brought into surface contact with each other when the pair of container elements are mated, and has a thickness that gradually decreases toward a bottom of the V-shaped groove, the bottom of the V-shaped groove is pulled when the pair of container elements are mated, and the hinge has the single V-shaped groove.

A container according to still another aspect includes: a pair of container elements to be mated to constitute the container; and a hinge connecting the pair of container elements, the pair of container elements and the hinge being integrally formed from a resin by foam molding with mating surfaces of the pair of container elements pointing unidirectionally. In the container, at least a part of the hinge is pulled when the pair of container elements are mated, the hinge includes a strip portion suspended between opposite outer surfaces of the pair of container elements, at two locations away from the mating surfaces, and the strip portion becomes deformed by bending at two ends of the strip portion and an area of the strip portion between the two ends is pulled when the pair of container elements are mated.

### BRIEF DESCRIPTION OF THE DRAWINGS

FIG. 1 is a perspective view illustrating a container according to a first embodiment of the present disclosure.
FIG. 2 is a plan view illustrating the container in an unfolded state.
FIG. 3 is a sectional view taken along line A-A in FIG. 2 illustrating the container in the unfolded state.
FIG. 4 is a sectional view illustrating the container in a closed state.
FIG. 5 is a perspective view illustrating a container according to a second embodiment.
FIG. 6 is a plan view illustrating the container according to the second embodiment in an unfolded state.
FIG. 7 is a sectional view taken along line B-B in FIG. 6 illustrating the container according to the second embodiment.
FIG. 8 is a sectional view illustrating the container according to the second embodiment in a closed state.
FIG. 9 is a perspective view illustrating a container according to a third embodiment.
FIG. 10 is a plan view illustrating the container according to the third embodiment in an unfolded state.
FIG. 11 is a sectional view taken along line C-C in FIG. 10 illustrating the container according to the third embodiment.
FIG. 12 is a sectional view illustrating the container according to the third embodiment in a closed state.
FIG. 13 is a sectional view illustrating the container according to the third embodiment when the container is molded in a molding die.

### MODE FOR CARRYING OUT THE INVENTION

### [First Embodiment]

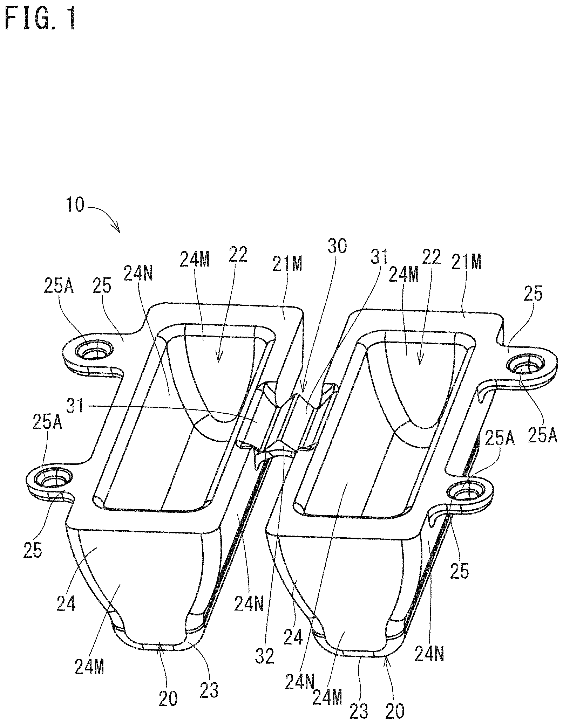

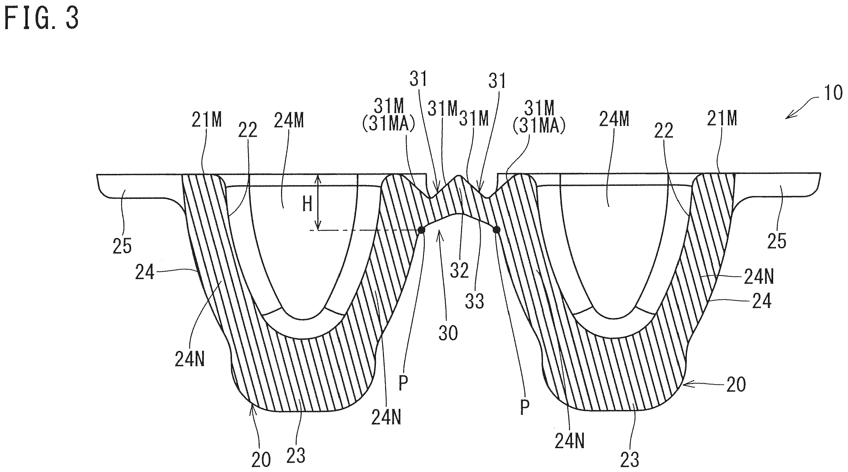

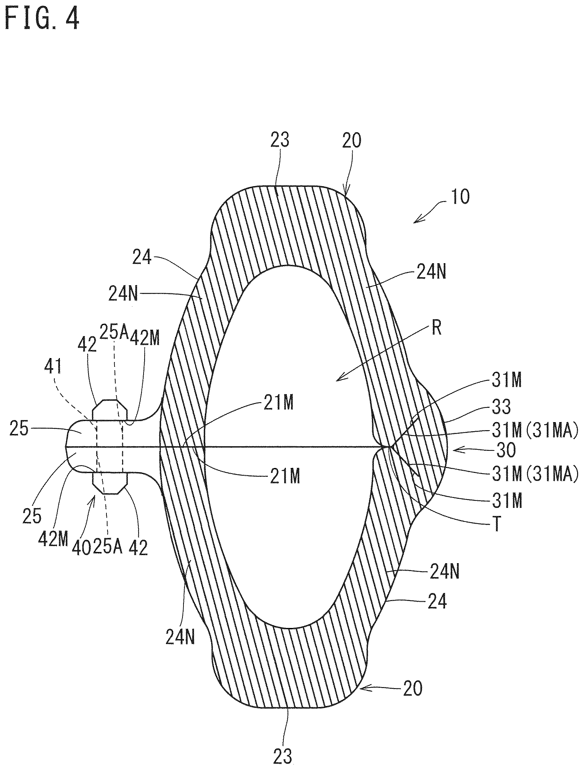

FIG. 1 illustrates a container 10 according to a first embodiment of the present disclosure. The container 10 includes a pair of container elements 20 and a hinge 30 connecting the pair of container elements 20. The container 10 has an accommodation space R (see FIG. 4) formed therein when the pair of container elements 20 are mated at their mating surfaces 21M. The pair of container elements 20 are changeable between an unfolded state in which the mating surfaces 21M point unidirectionally (see FIG. 3) and a closed state in which the mating surfaces 21M are in contact with each other as described above with the hinge 30 being bent (see FIG. 4). In an example of the present embodiment, the mating surfaces 21M of the pair of container elements 20 point unidirectionally and are flush with each other in the unfolded state.

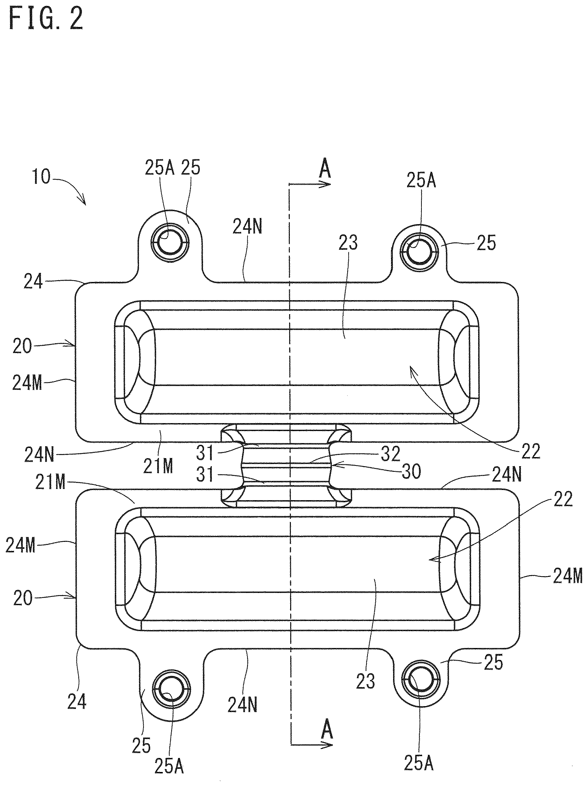

In an example of the present embodiment, each container element 20 has a recess 22 that forms the accommodation space R in the closed state. The recesses 22 have opening edges serving as the foregoing mating surfaces 21M. In an example of the present embodiment, each mating surface 21M extends circumferentially along the entire opening of the corresponding recess 22, and thus has a ring shape. As illustrated in FIGS. 1 and 2, in an example of the present embodiment, the opening of each recess 22 has a rectangular shape, and each mating surface 21M has a substantially rectangular ring shape.

Specifically, for example, each container element 20 includes a bottom 23 and a surrounding wall 24 standing from an outer edge of the bottom 23. The foregoing recesses 22 are formed inside the surrounding walls 24, and distal end surfaces of the surrounding walls 24 serve as the foregoing mating surfaces 21M. For example, each bottom 23 extends in the longitudinal direction of the opening of the corresponding recess 22, and thus has a substantially rectangular shape in plan view. Each surrounding wall 24 has a pair of shorter sidewalls 24M facing each other in the longitudinal direction of the corresponding recess 22, and a pair of longer sidewalls 24N facing each other in the transverse direction of the corresponding recess 22.

The hinge 30 connects respective one side surfaces of the pair of the container elements 20. In an example of the present embodiment, the hinge 30 connects respective outer surfaces of one of the longer sidewalls 24N of the container elements. For example, the hinge 30 connects longitudinal centers of ends near the mating surfaces 21M (ends which are away from the bottoms 23) of the ones of the longer sidewalls 24N (see FIGS. 1 to 3).

As illustrated in FIG. 3, in an example of the present embodiment, the hinge 30 has a V-shaped groove 31. The hinge 30 has a surface in which the V-shaped groove 31 is formed (a surface pointing inward in the closed state). This surface and the mating surfaces 21M in the unfolded state point unidirectionally. As illustrated in FIGS. 1 and 2, the V-shaped groove 31 extends from end to end of the hinge 30 in the widthwise direction of the hinge 30 perpendicular to the direction of connecting the pair of container elements 20. As illustrated in FIG. 3, the V-shaped groove 31 is located lower than the mating surfaces 21M, and the hinge 30 has a thickness that gradually decreases toward the bottom of the V-shaped groove 31.

The hinge 30 may have a plurality of V-shaped grooves 31. For example, the hinge 30 may have a plurality of V-shaped groove 31 arranged side by side in the widthwise direction of each V-shaped groove 31 (in the connecting direction in the hinge 30), and a protrusion 32 having a triangular shape in sectional view and located between adjacent two of the V-shaped grooves 31. In an example of the present embodiment, the hinge 30 has two V-shaped grooves 31 and the protrusion 32 located between the V-shaped grooves 31, and a vertex of the protrusion 32 is located lower than (e.g., located slightly lower than) the mating surfaces 21M (see FIG. 3). For example, the hinge 30 may also have an arc-shaped groove 33 formed in an outer surface (e.g., formed over the entire outer surface) of the hinge 30 reverse from the surface in which the two V-shaped grooves 31 are formed so as to extend in the widthwise direction of the hinge 30. For example, the two V-shaped grooves 31 may be formed at two ends of the hinge 30 (end areas to be connected to the container elements 20), so that these areas of the hinge 30 may become thinner than an area of the hinge 30 between the V-shaped grooves 31 (e.g., a center of the hinge 30 in the direction of connecting the pair of container elements 20).

The container 10 according to the present embodiment includes the pair of container elements 20 and the hinge 30 that are formed by integral molding. The container 10 is, for example, an integrally molded product made from a resin. Specifically, the container 10 is made from, for example, an elastic material. In an example of the present embodiment, the container 10 is a foam molded product in which the container elements 20 and the hinge 30 are integrally formed by foam molding. In the present embodiment, the container 10 is molded in the foregoing unfolded state in which the mating surfaces 21M of the pair of container elements 20 point unidirectionally, in a molding die.

The container 10 is closed as illustrated in FIG. 4 in such a manner that the hinge 30 is bent and the mating surfaces 21M of the pair of container elements 20 are brought into contact with each other as described above. In an example of the present embodiment, a fixing member 40 for fixing the pair of container elements 20 to each other is provided in order to maintain the closed state. For example, the fixing member 40 fixes respective areas of the container elements 20, located opposite the hinge 30 across the recesses 22, to each other. In an example of the present embodiment, each container element 20 includes a placement overhanging portion 25 that overhangs outward from one of the longer sidewalls 24N opposite the hinge 30. The fixing member 40 fixes the placement overhanging portions 25 of the container elements 20 to each other with the placement overhanging portions 25 placed on top of each other in the closed state. Specifically, for example, the placement overhanging portions 25 have through holes 25A that communicate with each other in a mating direction of the placement overhanging portions 25, and the fixing member 40 is inserted into the through holes 25A. For example, the placement overhanging portion 25 of each container element 20 overhangs from an end near the mating surface 21M in the longer sidewall 24N, which is opposite the hinge 30. In an example of the present embodiment, the placement overhanging portions 25 of the container elements 20 each have a substantially plate shape. In addition, the placement overhanging portions 25 have surfaces to be brought into contact with each other in the closed state, and these surfaces are flush with the mating surfaces 21M.

For example, each container element 20 may include a plurality of placement overhanging portions 25. In an example of the present embodiment, each container element 20 includes two placement overhanging portions 25 located near two ends of one of the longer sidewalls 24N in the longitudinal direction.

In an example of the present embodiment, the fixing member 40 includes a rod-shaped portion 41 and overhanging lock portions 42 that overhang outward from two ends of the rod-shaped portion 41. As described above, the fixing member 40 is inserted into the pair of placement overhanging portions 25 placed on top of each other in the closed state. Specifically, the rod-shaped portion 41 is inserted into the through holes 25A in the pair of placement overhanging portions 25 placed on top of each other, and the overhanging lock portions 42 are locked at opposite opening edges of the through holes 25A. The pair of placement overhanging portions 25 placed on top of each other are thus fixed to each other, so that the pair of container elements 11 are fixed to each other. The overhanging lock portions 42 are larger than the through holes 25A (e.g., the overhanging lock portions 42 are larger in diameter than the through holes 25A). However, the overhanging lock portions 42 are capable of passing through the through holes 25A by press fitting.

Specifically, in an example of the present embodiment, each overhanging lock portion 42 has a shape tapered in the direction away from the rod-shaped portion 41 (e.g., a conical shape, a pyramidal shape, a truncated conical shape, or a truncated pyramidal shape). As described above, since each overhanging lock portion 42 has a tapered shape or since each placement overhanging portion 25 is made from an elastic material such as a foam material, the overhanging lock portions 42 are capable of easily passing through the through holes 25A. Also, in an example of the present embodiment, each overhanging lock portion 42 has a stepped surface 42M pointing the rod-shaped portion 41. The stepped surfaces 42M allow the overhanging lock portions 42 to be easily locked at the opening edges of the through holes 25A in the placement overhanging portions 25. In an example of the present embodiment, the fixing member 40 has a symmetrical shape in the axial direction of the rod-shaped portion 41. Accordingly, it is unnecessary to adjust the orientation of the fixing member 40 in the axial direction of the rod-shaped portion 41. Therefore, it is possible to facilitate an operation for fixing the pair of container elements 20 to each other.

As illustrated in FIG. 4, the hinge 30 is bent in the closed state in which the pair of container elements 20 are mated. At this time, in an example of the present embodiment, a pair of inner surfaces 31M that constitute the inner surfaces of each V-shaped groove 31 are brought into surface contact with each other. Moreover, two inner surfaces 31MA which are farthest from each other in the two V-shaped grooves are partially brought into contact with each other (see a contact position T in FIG. 4). At this time, the protrusion 32 between the two V-shaped grooves 31 becomes deformed by compression between the inner surfaces 31MA. In an example of the present embodiment, the inner surface of the hinge 30, in which the V-shaped grooves 31 are formed, is thus brought into close contact with the outer surfaces of the pair of container elements 20 without a gap. In an example of the present embodiment, the pair of inner surfaces 31M of each V-shaped groove 31 are substantially orthogonal to each other.

In the closed state in which the pair of container elements 20 are mated, at least a part of the hinge 30 is pulled in the direction of mating the container elements 20. This configuration allows the hinge 30 to generate restoring force that brings the mating surfaces 21M of the pair of container elements 20 into close contact with each other. Therefore, it is possible to improve the close contact between the mating surfaces 21M. Specifically, in an example of the present embodiment, in the closed state, the bottom of each V-shaped groove 31 in the hinge 30 is pulled in the direction of mating the container elements 20. For example, in the unfolded state illustrated in FIG. 3, preferably, a height H of each mating surface 21M relative to a boundary P between the outer surface (the surface reverse from the surface in which the V-shaped grooves 31 are formed) of the hinge 30 and the outer surface of each container element 20 is substantially a half of a length of the hinge 30 (a length in the direction of connecting the container elements 20; a length between the two boundaries P).

In the container 10 according to the present embodiment, the hinge 30 connects the container elements 20. Therefore, it is possible to easily mate the container elements 20, as compared with a case of mating the container elements 20 that are not connected to each other. For example, it is possible to easily adjust the orientations of the container elements, and to easily mate the container elements 20. In addition, the pair of container elements 20 are molded using a foam resin. Therefore, it is possible to easily bring the mating surfaces 21M of the pair of container elements 20 into close contact with each other. In addition, at least a part of the hinge 30 is pulled when the pair of container elements 20 are mated. Therefore, it is possible to more easily bring the mating surfaces 21M (particularly the areas near the hinge 30) into close contact with each other. It is also possible to inhibit the mating surfaces 21M from being displaced from each other, when the hinge 30 is pulled, as compared with a case where the hinge 30 is loosened without being pulled. Therefore, it is possible to more easily bring the mating surfaces 21M into contact with each other. It is also possible to improve the close contact between the mating surfaces 21M when the hinge 30 is pulled. Therefore, it is possible to decrease the number of positions to be fixed by the fixing members 40 and to reduce the number of parts.

It should be noted that the use of the container 10 and an object to be accommodated in the accommodation space R in the container 10 are not particularly limited. For example, the container 10 may be installed in a vehicle (e.g., an automobile) to accommodate a compressor (e.g., a compressor of an automotive air conditioner). For example, in a case where a noise source, such as a compressor, is required to be hermetically sealed in the container 10, it is possible to inhibit noise from leaking through a gap between the mating surfaces 21 since it is possible to easily bring the mating surfaces 21 into close contact with each other.

In the container 10 according to the present embodiment, it is also possible to inhibit the hinge 30 from projecting outward since the hinge 30 is pulled in the closed state. The container 10 according to the present embodiment is molded such that the mating surfaces 21M are connected to each other and point unidirectionally. Therefore, it is possible to easily achieve a configuration in which at least a part of the hinge 30 is pulled when the pair of container elements 20 are mated at their mating surfaces 21M.

In the container 10 according to the present embodiment, the hinge 30 has the V-shaped grooves 31, and the thickness of the hinge 30 gradually decreases toward the bottom of each V-shaped groove 31. Therefore, it is possible to easily bend the hinge 30 at the areas where the V-shaped grooves 31 are formed. In addition, the bottom of each V-shaped groove in the hinge is pulled when the pair of container elements are mated. Therefore, it is possible to easily bring the mating surfaces into close contact with each other as described above. It is also possible to inhibit the hinge from projecting with the pair of container elements 20 being mated.

In the container 10 according to the present embodiment, the hinge 30 has the plurality of V-shaped grooves 31. Therefore, it is possible to easily bend the hinge 30. In addition, the vertex of the protrusion 32 between the adjacent two V-shaped grooves 31 is located lower than the mating surfaces 21M. Therefore, it is possible to inhibit the protrusion from interfering the mating surfaces 21M when the mating surfaces 21M are mated with each other. Further, in the container 10 according to the present embodiment, of the four inner surfaces 31M of the two V-shaped grooves 31, the two inner surfaces 31MA which are farthest from each other are partially brought into contact with each other. Therefore, the protrusion 32 is housed between the two inner surfaces 31MA. As a result, it is possible to inhibit a situation where contacting the mating surfaces 21M with each other is difficult due to the interference with the protrusion 32. In addition, in the container 10 according to the present embodiment, the protrusion 32 becomes deformed by compression between the two inner surfaces 31MA. Therefore, it is possible to more easily bring the mating surfaces 21M into contact with each other.

In the container 10 according to the present embodiment, the hinge 30 has the arc-shaped groove 33 formed in the entire outer surface reverse from the surface in which the two V-shaped grooves 31 are formed. Therefore, it is possible to inhibit the hinge 30 from projecting at the time when the hinge 30 is bent and the pair of container elements 20 are mated at their mating surfaces 21M. As a result, it is possible to reduce the size of the container 10 and to improve the appearance of the container 10 in the state in which the pair of container elements 20 are mated.

### [Second Embodiment]

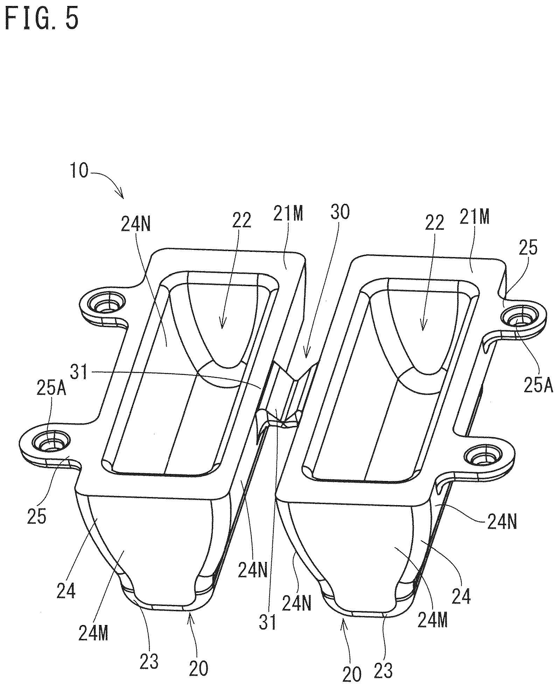

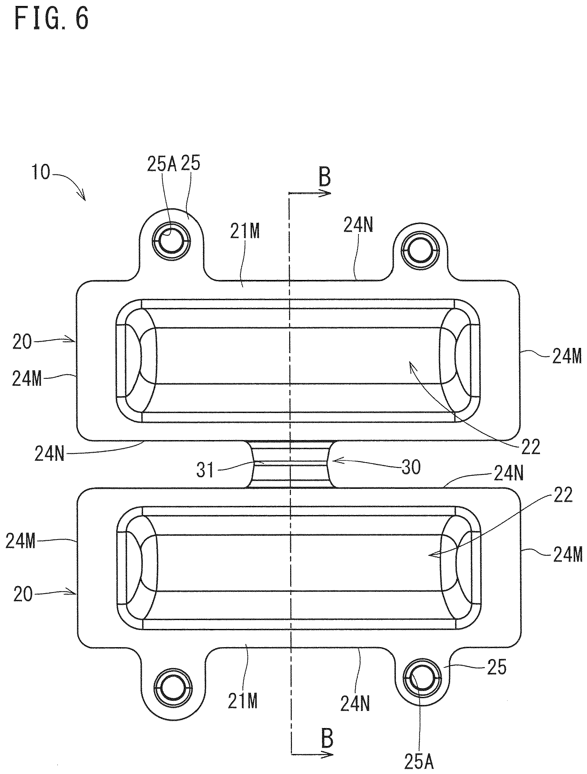

FIGS. 5 to 8 each illustrate a container 10 according to a second embodiment. The container 10 according to the present embodiment is the same in configuration with the container 10 according to the first embodiment except for a configuration of a hinge 30.

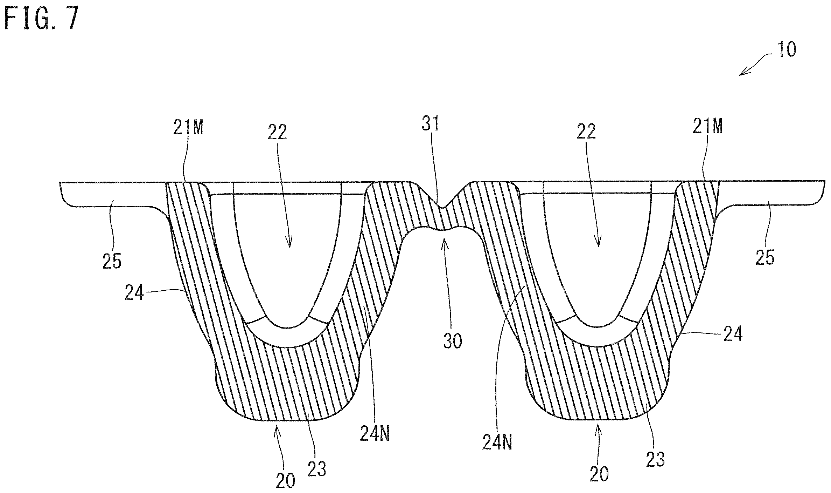

As illustrated in FIGS. 5 and 7, in an example of the present embodiment, the hinge 30 has one V-shaped groove 31. For example, the V-shaped groove 31 is formed at a center of the hinge 30 in the direction of connecting a pair of container elements 20.

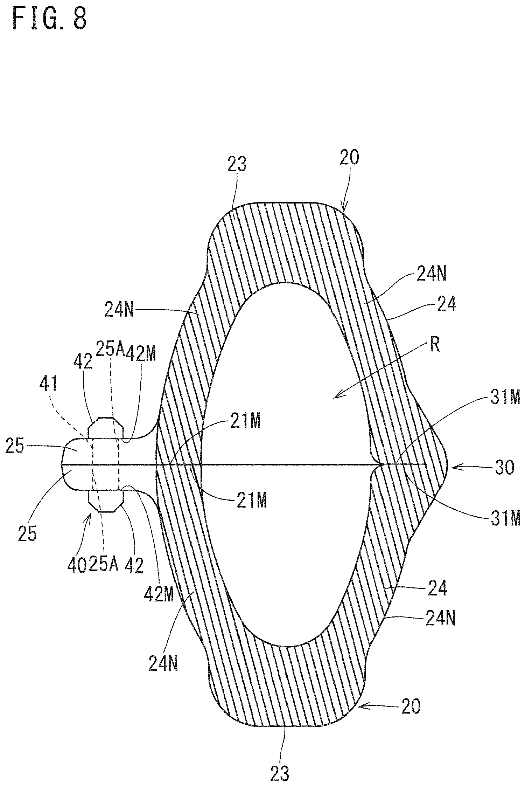

As illustrated in FIG. 8, the hinge 30 is bent in a closed state in which the pair of container elements 20 are mated at their mating surfaces 21M. At this time, a pair of inner surfaces 31M of the V-shaped groove 31 are brought into surface contact with each other. In an example of the present embodiment, the inner surfaces 31M, which are in surface contact with each other, are flush with the mating surfaces 21M of the pair of container elements 20.

Also in present embodiment, at least a part of the hinge 30 (specifically, the bottom of the V-shaped groove 31 in the hinge 30) is pulled in the direction of mating the pair of container elements 20 in the closed state in which the container elements 20 are mated.

Also in the container 10 according to the present embodiment, it is possible to easily mate the container elements 20 as in the foregoing container 10 according to the first embodiment.

### [Third Embodiment]

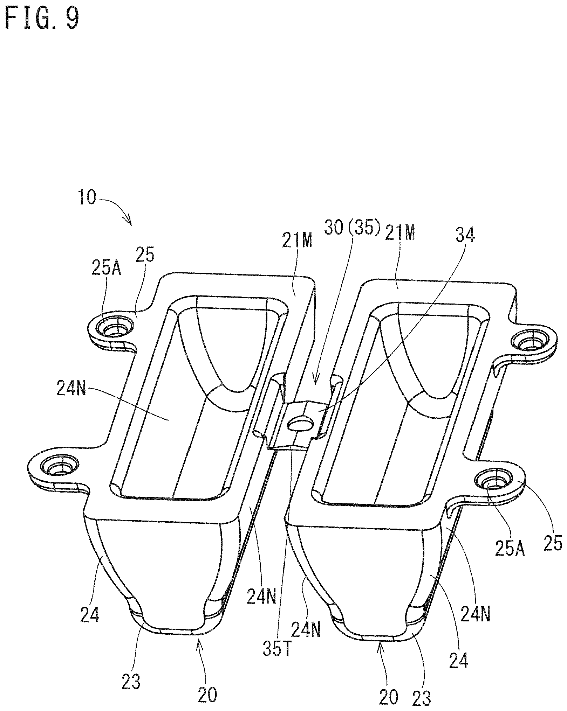

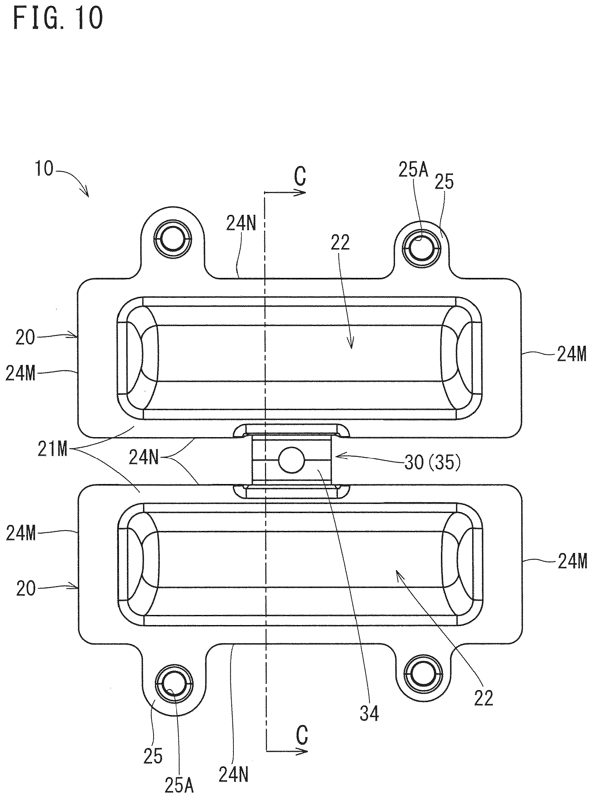

FIGS. 9 to 13 each illustrate a container 10 according to a third embodiment. The present embodiment is the same in configuration with each of the first and second embodiments except for a configuration of a hinge 30. Specifically, in an example of the present embodiment, the hinge 30 is configured such that a strip portion 35 is suspended between opposite outer surfaces of a pair of container elements 20 (outer surfaces of longer sidewalls 24) in an unfolded state. The strip portion 35 is suspended between two locations away from mating surfaces 21M, and is located at a position displaced from the extension surface of mating surfaces 21M. For example, the strip portion 35 is displaced at its two ends from the mating surfaces 21M by a length that is substantially equal to, or is not less than, a half of a length of the strip portion 35 (e.g., slightly longer than the half).

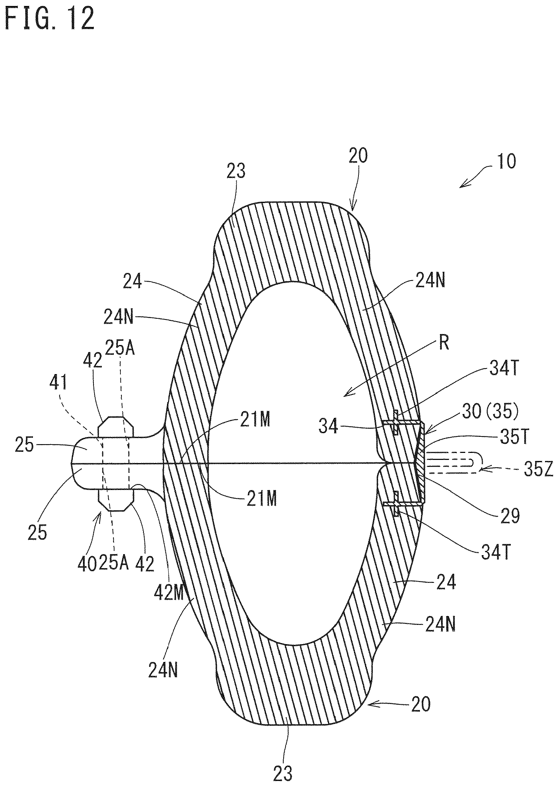

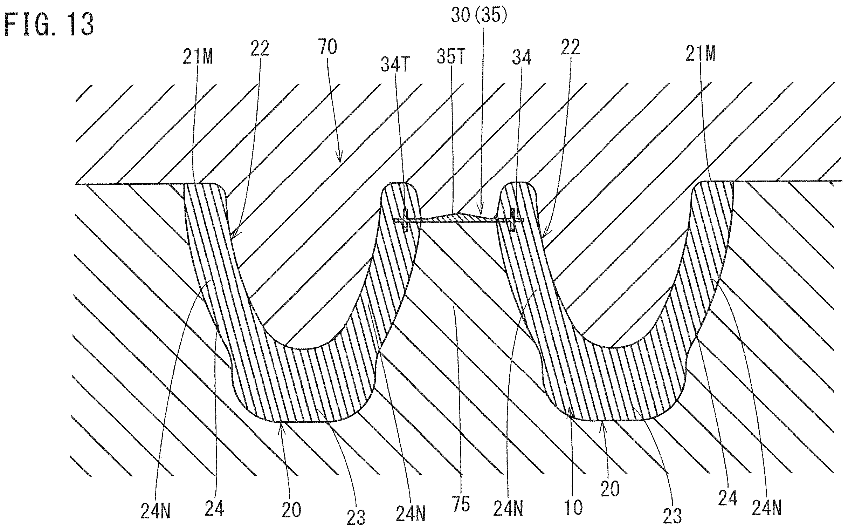

As illustrated in FIGS. 12 and 13, in an example of the present embodiment, the hinge 30 (the strip portion 35) constitutes a part of a component 34. The component 34 is a flat component that is deformable by bending and has a longitudinal direction parallel to the direction of connecting the pair of container elements 20. In an example of the present embodiment, the component 34 is an insert component (which is made from, for example, a resin) to be integrated with the pair of container elements 20 when the pair of the container elements 20 are foam molded. The component 34 has two ends in the longitudinal direction. The two ends are embedded in the pair of container elements 20. An exposed area, suspended between the pair of container elements 20, of the component 34 configures the foregoing strip portion 35. The component 34 has, at its two ends embedded in the container elements 20, protrusion walls 34T protruding in the thickness direction of the component 34. As a result, the two ends of the component 34 are less susceptible to disconnection from the container elements 20.

As illustrated FIG. 12, in an example of the present embodiment, the hinge 30 is bent in a closed state in which the pair of container elements 20 are mated at their mating surfaces 21M. At this time, the hinge 30 (the strip portion 35) becomes deformed by bending at its two ends, and an area of the strip portion 35 between the two ends is pulled in the direction of mating the pair of container elements 20. Also at this time, the strip portion 35 is brought into contact with the outer surfaces of the pair of container elements 20 with the strip portion 35 placed and abutted on the outer surfaces.

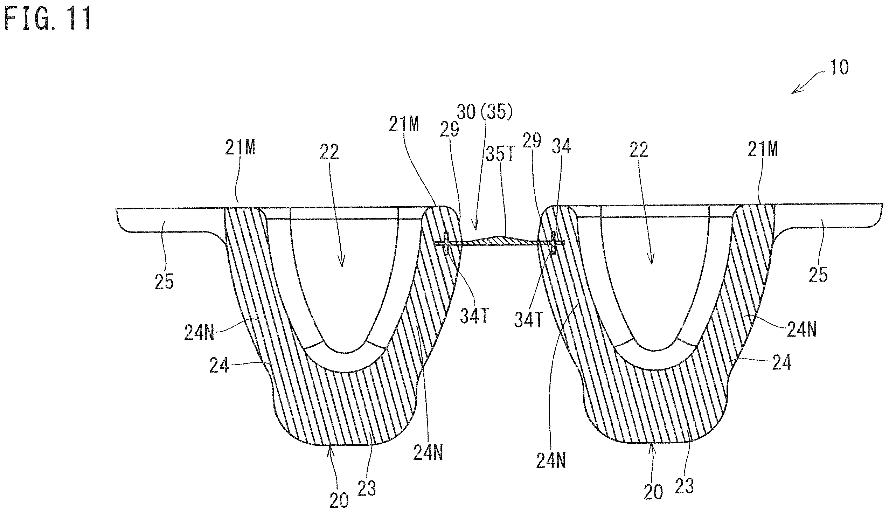

As illustrated in FIG. 11, in an example of the present embodiment, the two ends of the strip portion 35 (i.e., end areas, to be connected to the pair of container elements 20, of the strip portion 35) are thinner than the area of the strip portion 35 between the two ends. Specifically, in an embodiment of the present embodiment, the strip portion 35 has a thickness that gradually increases toward the center of the strip portion 35 in the longitudinal direction of the component 34. Specifically, in an example of the present embodiment, the strip portion 35 has a flat isosceles triangular shape as seen in the widthwise direction of the strip portion 35. In addition, the strip portion 35 has a flat surface that points opposite from the pair of container elements 20 in the close state (a surface pointing rightward in FIG. 12). The strip portion 35 also has a surface that faces the pair of container elements 20 in the closed state (a surface pointing leftward in FIG. 12). This surface gradually protrudes toward the center of the strip portion 35, so that a triangular protrusion 35T having a flat isosceles triangular shape in sectional view is formed on this surface. As illustrated in FIG. 9, for example, the strip portion 35 may have a through hole (at, for example, the center of the strip portion 35).

The longer sidewalls 24 of the respective container elements 20, which are connected to each other via the hinge 30, have receiving recesses 29 for receiving the triangular protrusion 35T of the strip portion 35, at positions where the longer sidewalls 24 are placed on the hinge 30 (the strip portion 35) in the closed state. The receiving recesses 29 in the longer sidewalls 24N connected to each other via the hinge 30 each have a depth that gradually increases from the areas connected to the hinge 30 toward the mating surfaces 21M.

Also in the container 10 according to the present embodiment, it is possible to easily mate the container elements 20 as in the foregoing container 10 according to the first embodiment. In the container 10 according to the present embodiment, the hinge 30 includes the strip portion 35 suspended between the opposite outer surfaces of the pair of container elements 20 at the two locations away from the mating surfaces 21M. When the pair of container elements 20 are mated, the strip portion 35 becomes deformed by bending at its two ends, and the area of the strip portion 35 between the two ends is pulled. As a result, it is possible to inhibit the hinge 30 from projecting with the pair of container elements 20 being mated.

If the hinge 30 including the strip portion 35 is replaced with a hinge including a strip portion 35Z indicated by a chain double-dashed line in FIG. 12, this hinge has end areas to be connected to the container elements 20 near the mating surfaces 21M. In this case, the strip portion 35Z is loosened and is likely to project outward with the strip portion 35Z being bent in the closed state. To cope with this, if the strip portion 35Z is formed to be shorter, a molding die 70 (see FIG. 13) for integrally molding the container 10 in an unfolded state needs to have a shallow molding protrusion 75 for molding the opposite surfaces of the pair of container elements 20. Therefore, there is a possibility that the strength of the molding protrusion 75 is decreased, and the molding die 70 is susceptible to damage.

In contrast to this, the hinge 30 (the strip portion 35) of the container 10 according to the present embodiment is suspended at the locations away from the mating surfaces 21M. Therefore, it is possible to cause the hinge 30 to be hardly loosened in the closed state even when the length of the hinge 30 is not made shorter more than necessary. Accordingly, it is also possible to thicken the molding protrusion 75 of the molding die 70 for molding the container 10 and to cause the molding die 70 to be less susceptible to damage.

It is also possible to inhibit the hinge 30 from projecting at the time when the hinge 30 is bent, since the hinge 30 (the strip portion 35) becomes deformed by bending at its two ends. In addition, the two ends of the strip portion 35 are thinner than the area of the strip portion 35 between the two ends. Therefore, it is possible to easily bend the hinge at the two ends of the strip portion 35 and to further inhibit the hinge from projecting when the pair of container elements are mated.

In the present embodiment, the strip portion 35 is placed on the outer surfaces of the pair of container elements 20 when the pair of container elements 20 are mated. Therefore, it is possible to further inhibit the hinge 30 from projecting. In addition, the container elements 20 each have the receiving recess 29. Therefore, it is possible to house the triangular protrusion 35T of the hinge 30 in the receiving recesses 29 and to further inhibit the hinge 30 from projecting, in the closed state.

### [Other Embodiments]

(1) In each of the foregoing embodiments, the container elements 20 each have the recess 22. Alternatively, only one of the container elements 20 may have the recess 22 while the other container element 20 may be, for example, a plate-shaped lid. The shape of the container 10 is not limited to the shapes described in the first to third embodiments (FIGS. 1, 5, and 9, etc.).
(2) Each of the container elements 20 may be made of, for example, an elastomer. Alternatively, each of the container elements 20 may be made of a foam material or may be made of rubber. The hinge 30 may be made of, for example, an elastomer. Alternatively, the hinge 30 may be made of a foam material or may be made of rubber. For example, the container 10 may include container elements 20 and a hinge 30 that are formed from a single material by integral molding. Alternatively, the container 10 may be an insert molded product including container elements 20 and a hinge 30 that are respectively made of different materials and the hinge 30 may be inserted. It should be noted that the pair of container elements 20 may be made of different materials from each other.
(3) In the first embodiment, the hinge 30 does not necessarily have the arc-shaped groove 33 formed in the surface reverse from the surface in which the V-shaped grooves 31 are formed. Alternatively, the hinge 30 may have a flat surface or may have an area that bulges in an arc shape, in place of the arc-shaped groove 33.
(4) In the hinge 30 having the plurality of V-shaped grooves 31, a distance between adjacent two of the plurality of V-shaped grooves 31 may be longer than that in the first embodiment, and a trapezoidal portion having a trapezoidal shape in sectional view may be provided between the adjacent V-shaped grooves 31. In the hinge 30 having three or more V-shaped grooves 31, the hinge 30 may have at least one of the protrusion 32 and the trapezoidal portion between adjacent two of the three or more V-shaped grooves 31.
(5) In the first or second embodiment, the pair of inner surfaces 31M of each V-shaped groove 31 are not necessarily brought into surface contact with each other in the closed state, but a clearance may be formed between the pair of inner surfaces 31M. Further, in the first or second embodiment, a clearance may be formed between the surface of the hinge 30, in which the V-shaped grooves 31 are formed, and the container elements 20. In the first embodiment, the two inner surfaces 31MA, which are farthest from each other, of the two V-shaped grooves 31 are not necessarily brought into contact with each other in the closed state. In addition, the protrusion 32 between the two V-shaped grooves 31 does not necessarily become deformed by compression between the inner surfaces 31MA in the closed state.
(6) In the first embodiment, the vertex of the protrusion 32 may be located on the extension surface of the mating surfaces 21M or may be located higher than the extension surface of the mating surfaces 21M (the upper side in FIG. 3).
(7) In the second embodiment, the pair of inner surfaces 31M, which are in surface contact with each other, of the V-shaped groove 31 are not necessarily flush with the mating surfaces 21M of the pair of container elements 20 when the container 10 is in the closed state. Also in the second embodiment, the pair of inner surfaces 31M of the V-shaped groove 31 are not necessarily brought into surface contact with each other, and a clearance may be formed between the pair of inner surfaces 31M when the container 10 is in the closed state.
(8) In the third embodiment, the hinge 30 is not necessarily brought into contact with the outer surfaces of the container elements 20 when the container 10 is in the closed state.
(9) In the third embodiment, the strip portion 35 may have a uniform thickness.
(10) In each of the foregoing embodiments, the container 10 may include a plurality of hinges 30.
(11) In each of the foregoing embodiments, the hinge 30 is not necessarily pulled when the container 10 is in the closed state. For example, in this configuration, the hinge 30 may have one V-shaped groove, two V-shaped grooves, or three or more V-shaped grooves, and the thickness of the hinge 30 may gradually decrease toward the bottom of the hinge 30.

It should be noted that the foregoing embodiments each disclose the following container.

A container including: a pair of container elements to be mated to constitute the container; and a hinge connecting the pair of container elements, the pair of container elements and the hinge being integrally formed from a resin by foam molding with mating surfaces of the pair of container elements pointing unidirectionally, wherein
at least a part of the hinge is pulled when the pair of container elements are mated.

The foregoing description and drawings disclose specific examples of techniques embraced in the claims. However, the techniques recited in the claims are not limited to these specific examples. The techniques recited in the claims involve various changes and modifications of the specific examples, and also involve part of the specific examples singly extracted from the specific examples.

### DESCRIPTION OF THE REFERENCE NUMERAL

- 10: container
- 20: container element
- 21M: mating surface
- 30: hinge
- 31: V-shaped groove
- 31M: inner surface
- 32: protrusion
- 33: groove
- 35: strip portion

## Claims

1. A container comprising:
a pair of container elements to be mated to constitute the container; and
a hinge connecting the pair of container elements, the pair of container elements and the hinge being integrally formed from a resin by foam molding with mating surfaces of the pair of container elements pointing unidirectionally, wherein
at least a part of the hinge is pulled when the pair of container elements are mated,
the hinge has a V-shaped groove located lower than the mating surfaces and including a pair of inner surfaces arranged in a V shape and brought into surface contact with each other when the pair of container elements are mated, and has a thickness that gradually decreases toward a bottom of the V-shaped groove,
the bottom of the V-shaped groove is pulled when the pair of container elements are mated,
the hinge has two of the V-shaped grooves,
the hinge includes a protrusion located between the two V-shaped grooves, the protrusion having a vertex located lower than the mating surfaces, and
of the four inner surfaces of the two V-shaped grooves, two inner surfaces which are farthest from each other are partially brought into contact with each other.

2. The container according to claim 1, wherein the protrusion becomes deformed by compression between the two inner surfaces, which are partially in contact with each other, when the pair of container elements are mated.

3. The container according to claim 1 or 2, wherein
the hinge has an arc-shaped groove formed in an entire outer surface of the hinge reverse from a surface of the hinge in which the two V-shaped grooves are formed.

4. A container comprising:
a pair of container elements to be mated to constitute the container; and
a hinge connecting the pair of container elements, the pair of container elements and the hinge being integrally formed from a resin by foam molding with mating surfaces of the pair of container elements pointing unidirectionally, wherein
at least a part of the hinge is pulled when the pair of container elements are mated,
the hinge has a V-shaped groove located lower than the mating surfaces and including a pair of inner surfaces arranged in a V shape and brought into surface contact with each other when the pair of container elements are mated, and has a thickness that gradually decreases toward a bottom of the V-shaped groove,
the bottom of the V-shaped groove is pulled when the pair of container elements are mated, and
the hinge has the single V-shaped groove.

5. The container according to claim 4, wherein the pair of inner surfaces of the V-shaped groove are flush with the mating surfaces of the pair of container elements with the pair of container elements being mated.

6. A container comprising:
a pair of container elements to be mated to constitute the container; and
a hinge connecting the pair of container elements, the pair of container elements and the hinge being integrally formed from a resin by foam molding with mating surfaces of the pair of container elements pointing unidirectionally, wherein
at least a part of the hinge is pulled when the pair of container elements are mated,
the hinge includes a strip portion suspended between opposite outer surfaces of the pair of container elements, at two locations away from the mating surfaces, and
the strip portion becomes deformed by bending at two ends of the strip portion, and an area of the strip portion between the two ends is pulled when the pair of container elements are mated.

7. The container according to claim 6, wherein
the strip portion is placed on the outer surfaces of the pair of container elements when the pair of container elements are mated.

8. The container according to claim 6 or 7,
wherein
the two ends of the strip portion are thinner than the area of the strip portion between the two ends.
